# EUROPEAN PATENT SPECIFICATION

(11) **EP 4 071 861 B1**
(45) Date of publication and mention of the grant of the patent: **17.06.2026**
(21) Application number: 20906130.8
(22) Date of filing: 24.12.2020
(51) Int. Cl.: H01M 4/62, H01M 4/13, H01M 4/139, H01M 4/04, H01M 10/052, H01M 4/02, H01M 4/131, H01M 4/1391, H01M 10/0525

(54) **AQUEOUS SLURRY FOR POSITIVE ELECTRODE, POSITIVE ELECTRODE COMPOSITION, LITHIUM-ION SECONDARY BATTERY INCLUDING SAID POSITIVE ELECTRODE COMPOSITION, AND METHODS FOR MANUFACTURING SAME**
WÄSSRIGE AUFSCHLÄMMUNG FÜR POSITIVE ELEKTRODE, POSITIVE ELEKTRODENZUSAMMENSETZUNG, LITHIUM-IONEN SEKUNDÄRBATTERIE MIT DIESER POSITIVEN ELEKTRODENZUSAMMENSETZUNG UND VERFAHREN ZU IHRER HERSTELLUNG
SUSPENSION AQUEUSE D'ÉLECTRODE POSITIVE, COMPOSITION D'ÉLECTRODE POSITIVE, BATTERIE SECONDAIRE AU LITHIUM-ION COMPRENANT LADITE COMPOSITION D'ÉLECTRODE POSITIVE, ET LEURS PROCÉDÉS DE FABRICATION

(30) Priority: 26.12.2019 JP 2019236899
(43) Date of publication of application: 12.10.2022
(73) Proprietor: LG Energy Solution, Ltd., Seoul 07335 (KR)
(72) Inventor: CHIHARA, Kuniko, Tokyo 140--0002 (JP); MATSUBARA, Keiko, Tokyo 140--0002 (JP)
(74) Representative: Hoffmann Eitle
(86) International application number: PCT/KR2020/019159
(87) International publication number: WO 2021/133127

(56) References cited:
- CN-A- 109 461 901
- JP-B2- 4 649 692
- JP-B2- 6 510 784
- JP-B2- 6 517 344
- KR-A- 20060 001 744
- KR-A- 20150 080 858
- US-A1- 2011 143 198
- US-A1- 2014 342 224
- "A Basic Guide to Particle Characterization", MALVERN INSTRUMENTS WORLDWIDE - WHITE PAPER, 2 May 2012 (2012-05-02), pages 1 - 26, XP055089322, Retrieved from the Internet <URL:http://golik.co.il/Data/ABasicGuidtoParticleCharacterization(2)_1962085150.pdf>
- CPS INSTRUMENTS EUROPE: "Comparison of Particle Sizing Methods", 1 January 2019 (2019-01-01), XP055615022, Retrieved from the Internet <URL:http://www.cpsinstruments.eu/pdf/Compare%20Sizing%20Methods.pdf> [retrieved on 20190823]
- A. TRUNSCHKE: "Particle size measurement 03/11/2006 A. Trunschke Further reading Modern Methods in Heterogeneous Catalysis Research", 3 November 2006 (2006-11-03), XP055615050, Retrieved from the Internet <URL:http://www.fhi-berlin.mpg.de/acnew/department/pages/teaching/pages/teaching__wintersemester__2006_2007/trunschke_particlesize_031106.pdf> [retrieved on 20190823]
- M. LI ET AL: "Comparison of Particle Size Distributions Measured Using Different Techniques: Particulate Science and Technology: Vol 23, No 3", PARTICULATE SCIENCE AND TECHNOLOGY, 1 January 2005 (2005-01-01), pages 265 - 284, XP055615043, Retrieved from the Internet <URL:https://www.tandfonline.com/doi/full/10.1080/02726350590955912> [retrieved on 20190823]

## Description

### TECHNICAL FIELD

The present application claims the benefit of Japanese Patent Application No. 2019-236899 filed on December 26, 2019 with the Japan Patent Office. The present disclosure relates to an aqueous slurry for a positive electrode, a positive electrode composition, a lithium ion secondary battery comprising the positive electrode composition, and methods for manufacturing the same.

### BACKGROUND ART

With the increasing application range of lithium ion secondary batteries as a power source, development pursues higher energy in a manner of seeking active materials having higher theoretical capacity or expanding the operating voltage range, and requires batteries that stably operate in the broad temperature range. Accordingly, it is more difficult to ensure the cycle life or safety. Its solution is the transition of a negative electrode material, for example, a binder used in the lithium ion secondary battery from nonaqueous to aqueous to enhance the bonding between the electrode and the current collector, thereby improving high cycle performance.

Patent Literature 1 achieves a long life cycle using carboxymethyl cellulose (CMC)/styrene butadiene rubber (SBR) having high bonding as an aqueous binder in the negative electrode.

Meanwhile, in the positive electrode having a low volume expansion ratio during charging/discharging, compared to the negative electrode, the resistance and chemical stability of the binder affects the battery characteristics more greatly than the bonding, so the development guideline is very different. For example, when the aqueous binder is applied to the positive electrode, the increased resistance and oxidative degradation of SBR occur due to the coating property of the CMC. Accordingly, with regard to the positive electrode, the transition of the binder from nonaqueous to aqueous to improve the cycle characteristics is less, and dispersion of polyvinylidene fluoride (PVDF) and/or polytetrafluoroethylene (PTFE) in N-methyl-2-pyrrolidone (NMP) is still used.

However, there have been reports about gas generation or electrode separation caused by PVDF decomposition in the charge/discharge cycle under high temperature and high voltage, and in view of the current development trend of high temperature high voltage batteries and studies of the aqueous binder for the negative electrode that have been made so far, there is a very high expectation for the aqueous binder for the positive electrode.

Patent Literatures 2 and 3 propose to use an aqueous binder in the positive electrode, but still fail to realize an aqueous binder with long cycle life and high safety.

Patent Literature 4 relates to an aqueous electrode-forming composition comprising a fluoropolymer, particles of an active electrode material that comprises a core of an active electrode compound and an outer layer of a metallic compound different from lithium, and water; to a process for its manufacture; to a process for manufacturing an electrode structure using the same; to an electrode structure made from the same; and to an electrochemical device comprising said electrode structure.

Patent Literature 5 proposes a binder including a nitrile-based polymer nanoparticle and a fluorine-containing polymer nanoparticle, a positive active material composition for a rechargeable lithium battery including the binder, and a rechargeable lithium battery.

Patent Literature 6 relates to a secondary battery comprising water-dispersible polyvinylidene fluoride (PVdF) as an aqueous binder for a cathode mixture.

### [RELATED LITERATURES]

### [Patent Literatures]

Patent Literature 1: Japanese Patent Publication No. 2006-107896
Patent Literature 2: Japanese Patent Publication No. 2015-088276
Patent Literature 3: Japanese Patent Publication No. 2014-063676
Patent Literature 4: US 2014/0342224 A1
Patent Literature 5: US 2011/0143198 A1
Patent Literature 6: KR 10-2015-0080858 A

### DISCLOSURE

### Technical Problem

Therefore, a first object of the present disclosure is to provide an aqueous slurry for a positive electrode comprising an aqueous binder with improved lithium ionic conductivity, adhesion and chemical stability for a positive electrode.

Additionally, a second object of the present disclosure is to provide a positive electrode composition prepared from the aqueous slurry for a positive electrode.

Additionally, a third object of the present disclosure is to provide a lithium ion secondary battery comprising the positive electrode composition.

### Technical Solution

The present invention is set out in the appended claims.

A first aspect of the present disclosure provides a method for manufacturing an aqueous slurry for a positive electrode comprising mixing a fluoride-based polymer, a water-soluble polymer and a positive electrode active material to obtain a mixture and dispersing the mixture in an aqueous solvent. Obtaining the mixture comprises mixing the fluoride-based polymer and the positive electrode active material and adding the water-soluble polymer and mixing.

A second aspect of the present disclosure relates to an aqueous positive electrode slurry obtainable according to the method of the first aspect.

Meanwhile, in an embodiment, the fluoride-based polymer is particulate. Additionally, the fluoride-based polymer is at least one selected from polyvinylidene fluoride (PVDF), PVDF-HFP, PVDF-CTFE, PVDF-TrFE, PVDF-TFE.

Moreover, the fluoride-based polymer particles may have an average particle size of 50 nm to 250 nm, and the aqueous solvent may be water.

Meanwhile, in the present disclosure, the water-borne binder may comprise or consist of the fluoride-based polymer.

Meanwhile, in an embodiment of the present disclosure, in the aqueous positive electrode slurry, at least some of the fluoride-based polymer particles may be attached to the surface of the positive electrode active material particles.

A third aspect of the present disclosure provides a positive electrode composition comprising a binder composition for a positive electrode comprising a fluoride-based polymer and a water-soluble polymer comprising CMC, and positive electrode active material particles. A ratio of the water-soluble polymer to the fluoride-based polymer increases outwards from the surface of the positive electrode active material particles.

Meanwhile, in an embodiment, the fluoride-based polymer has an average particle size of 50 nm to 250 nm.

A fourth aspect of the present disclosure provides a lithium ion secondary battery comprising the positive electrode composition according to the third aspect.

A fifth aspect of the present disclosure provides a method for manufacturing a positive electrode comprising coating the aqueous slurry for a positive electrode according to the second aspect on a positive electrode current collector, and drying the aqueous solvent.

A sixth aspect of the present disclosure provides a positive electrode according to the fifth aspect.

A seventh aspect of the present disclosure provides a method for manufacturing a lithium ion secondary battery comprising the method for manufacturing a positive electrode according to the fifth aspect.

### Advantageous Effects

According to the aqueous slurry for a positive electrode, the positive electrode composition and the lithium ion secondary battery of the present disclosure, it is possible to impart lithium ionic conductivity, adhesive property and chemical stability to the positive electrode.

### BRIEF DESCRIPTION OF THE DRAWING

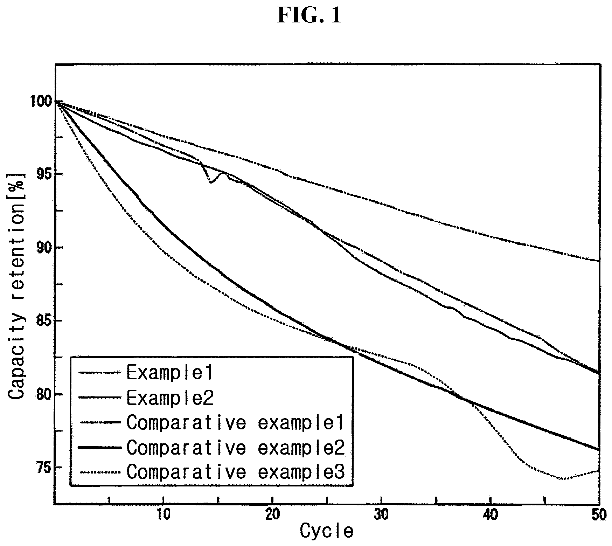

FIG. 1 shows the cycle characteristics of example 1, reference example 2 and comparative examples 1 to 5.

### DETAILED DESCRIPTION

Hereinafter, the present disclosure will be described in more detail to help the full understanding of the present disclosure.

In this instance, it should be understood that the terms or words used in the specification and the appended claims should not be construed as limited to general and dictionary meanings, but rather interpreted based on the meanings and concepts corresponding to the technical aspects of the present disclosure on the basis of the principle that the inventor is allowed to define terms appropriately for the best explanation.

### 〈Aqueous slurry for positive electrode〉

The present disclosure relates to an aqueous positive electrode slurry, and the aqueous positive electrode slurry comprises a positive electrode active material, a binder composition for a positive electrode and an aqueous solvent. The binder composition for a positive electrode comprises a water-borne binder and a water-soluble polymer and the water-borne binder may comprise or consist of a fluoride-based polymer. Preferably, in the aqueous positive electrode slurry, the binder composition for a positive electrode consists of a fluoride-based polymer as a binder. Meanwhile, in an embodiment of the present disclosure, the fluoride-based polymer comprises a PVDF-based polymer comprising vinylidene fluoride (VDF) as a monomer. Specific examples of the PVDF-based polymer may include PVDF homopolymer, poly(vinylidene fluoride-co-hexafluoropropylene) (PVDF-HFP), poly(vinylidene fluoride-co-chlorotrifluoroethylene) (PVDF-CTFE), poly(vinylidene tetrafluoroethylene) (PVDF-TFE), poly(vinylidene trifluoroethylene) (PVDF-TrFE). In a specific embodiment of the present disclosure, the water-borne binder may consist of the fluoride-based polymer, in particular, the PVDF-based polymer. That is, the water-borne binder comprises at least one selected from the group consisting of PVDF homopolymer, PVDF-HFP, PVDF-CTFE, PVDF-TFE and PVDF-TrFE. For example, the water-borne binder may consist of PVDF. Additionally, in the aqueous positive electrode slurry, the positive electrode active material and the water-borne binder are dispersed in the aqueous solvent.

In the specification, the binder refers to a material that imparts the adhesive, bonding, thickening and coating properties to the components of the positive electrode. In the present disclosure, the binder may comprise or consist of the PVDF-based polymer. Preferably, in the aqueous positive electrode slurry of the present disclosure, the binder may consist of the PVDF-based polymer.

Meanwhile, the binder composition for a positive electrode may further comprise a functional additive to improve the adhesive, bonding, thickening and/or coating properties or the electrical and chemical properties for a solvent/solution in which it is dissolved/dispersed or a positive electrode manufactured by coating and drying it.

Preferably, the binder composition for a positive electrode comprises the PVDF-based polymer and the water-soluble polymer, CMC. More preferably, the binder composition for a positive electrode according to the present disclosure consists of the PVDF-based polymer and CMC. The binder composition for a positive electrode comprising the PVDF-based polymer and the CMC may impart lithium ionic conductivity, adhesive property and chemical stability to the positive electrode.

### 〈Water-soluble polymer〉

The water-soluble polymer refers to a polymer that dissolves in at least part when added to an aqueous solvent. Before it is added to the aqueous solvent, the water-soluble polymer may be a variety of phases such as a powder, a gel, a viscous liquid, a bulk. In an embodiment, the water-soluble polymer may be a powder. In an embodiment of the present disclosure, the water-soluble polymer may include at least one of carboxymethyl cellulose (CMC), polyacrylate, polyvinylalcohol, polyacrylamide, polyethyleneoxide, starch, hydroxypropyl cellulose, regenerated cellulose, polyvinylpyrrolidone, polytetrafluoroethylene, polypropylene, ethylene-propylene-diene polymer (EPDM), fluorine rubber or a copolymer thereof. Preferably, the water-soluble polymer may comprise CMC.

Preferably, the water-borne binder may be used as an aqueous binder that is dispersed in the aqueous solvent.

Since the PVDF-based polymer almost does not dissolve or does not dissolve in the aqueous solvent unless treatment is separately performed, the PVDF-based polymer may be dispersed in the aqueous solvent. By this reason, when the PVDF-based polymer powder is mixed with positive electrode active material particles in the aqueous solvent and dried, the PVDF-based polymer powder may be attached in contact with the surface of the positive electrode active material particles. Additionally, even in the case of dry mixing not using the solvent, the PVDF-based polymer powder may be attached in contact with the surface of the positive electrode active material particles after mixing. The contact may be a point contact.

Before it is dispersed in the aqueous solvent, the PVDF-based polymer is not limited to a particular phase and may be a bulk, a powder, a paste and a liquid. In the specification, unless the context clearly indicates otherwise, the PVDF-based polymer is a powder.

The PVDF-based polymer may serve as a binder to promote the bonds between the surrounding components including the PVDF-based polymer, as well as a conducting path of a lithium ion when swells after wetted by an electrolyte solution. When the PVDF-based polymer is attached to the surface of the positive electrode active material particles and swells after wetted by the electrolyte solution, the PVDF-based polymer may promote the conduction of a lithium ion between the positive electrode active material particles and the electrolyte solution.

The PVDF-based polymer may be included in an amount of 0.1 to 10 parts by weight based on 100 parts by weight of the positive electrode composition. The PVDF-based polymer may be included in an amount of 0.5 to 5 parts by weight based on 100 parts by weight of the positive electrode composition. Preferably, the PVDF-based polymer may be included in an amount of 1 to 3 parts by weight based on 100 parts by weight of the positive electrode composition. When the amount of the PVDF-based polymer is included in the above-described range, the PVDF-based polymer may impart lithium ionic conductivity to the positive electrode. When the amount of the PVDF-based polymer is larger than the above-described range, the amount of the positive electrode active material in the positive electrode composition is lower and the positive electrode capacity may reduce. When the amount of the PVDF-based polymer is smaller than the above-described range, the conducting path of a lithium ion between the positive electrode active material particles and the electrolyte solution may reduce and the cycle characteristics may degrade.

As described above, the PVDF-based polymer may be dispersed in the aqueous solvent unless treatment is separately performed. In an embodiment, a premix of the PVDF-based polymer powder and the positive electrode active material particles may be used. Considering the size of the PVDF-based polymer and the positive electrode active material particles or the size of the positive electrode active material particles, any other binder and a conductive material dispersed in the PVDF-based polymer and the aqueous slurry for a positive electrode, the average particle size of the PVDF-based polymer may be at the submicron level. For example, the average particle size of the PVDF-based polymer may range from 50nm to 250nm. Additionally, the average particle size of the PVDF-based polymer may range from 100nm to 200nm. When the average particle size of the PVDF-based polymer is within the above-described range, the positive electrode active material particles and the PVDF-based polymer powder may be mixed well, and as a result, the PVDF-based polymer may be attached to the surface of the positive electrode active material particles. Accordingly, the PVDF-based polymer between the positive electrode active material particles and the electrolyte solution promotes the lithium ion conduction during the charge/discharge of a lithium ion secondary battery. When the average particle size of the PVDF-based polymer is higher than the above-described range, the PVDF-based polymer may not be uniformly mixed with the positive electrode active material particles, and as a result, the positive electrode composition may have a nonuniform composition, and degradation may occur in the cycle characteristics of a lithium ion secondary battery manufactured using the composition. When the average particle size of the PVDF-based polymer is smaller than the above-described range, the PVDF-based polymer powder may agglomerate. By this reason, the PVDF-based polymer may not be uniformly mixed with the positive electrode active material particles, and as a result, the positive electrode composition may have a nonuniform composition, and degradation may occur in the cycle characteristics of a lithium ion secondary battery manufactured using the composition. The average particle size of the PVDF-based polymer may be measured by the commonly used method such as laser diffraction, optical and electron microscopy and sieve analysis.

The CMC is dissolved in the aqueous solvent unless treatment is separately performed, and may impart the thickening property to the aqueous solvent. By this reason, when CMC powder is dissolved in the aqueous solvent, mixed with the positive electrode active material particles and dried, at least some of the positive electrode active material particle surface may be coated with the CMC.

Before it is dissolved in the aqueous solvent, the CMC is not limited to a particular phase and may be a bulk, a powder, a paste and a liquid. **In** the specification, unless the context clearly indicates otherwise, the CMC is a powder before it is dissolved in the aqueous solvent.

The CMC serves as a binder or a thickener when mixed with the positive electrode active material particles, to improve the adhesion in the positive electrode composition and the positive electrode.

The CMC coated on the positive electrode active material particles separates the electrolyte solution and the positive electrode active material to suppress the side reaction between the electrolyte solution and the positive electrode active material.

**In** an embodiment of the present disclosure, the CMC may be included in an amount of 0.1 to 10 parts by weight based on 100 parts by weight of the positive electrode composition. The CMC may be included in an amount of 0.5 to 5 parts by weight based on 100 parts by weight of the positive electrode composition. Preferably, the CMC may be included in an amount of 0.5 to 2.5 parts by weight based on 100 parts by weight of the positive electrode composition. More preferably, the CMC may be included in an amount of 0.8 to 2.5 parts by weight based on 100 parts by weight of the positive electrode composition. When the amount of the CMC is included in the above-described range, the CMC may impart the adhesive property and chemical stability to the positive electrode. When the amount of the CMC is higher than the above-described range, the amount of the positive electrode active material in the positive electrode composition reduces and the positive electrode capacity may reduce.

Here, the adhesive property refers to adhesion performance between the elements of the positive electrode, and high adhesive property prevents the delamination of the active material composition from the current collector or separation of the active material from the active material composition during charging/discharging. Additionally, it is expected to prevent the side reaction between the positive electrode active material particles and the electrolyte solution due to the coating property of the CMC, and when the amount of the CMC is larger than the above-described range, a thick coat of CMC is formed on the surface of the positive electrode active material particles and the lithium ionic conductivity between the positive electrode active material particles and the electrolyte solution may reduce. When the amount of the CMC is smaller than the above-described range, the adhesive property in the positive electrode composition reduces and the cycle characteristics may degrade, and when mixed with the positive electrode active material particles using the aqueous solvent, the positive electrode active material particles are not sufficiently coated, and it fails to prevent the side reaction between the positive electrode active material particles and the electrolyte solution.

The present disclosure combines PVDF which promotes the lithium ion conduction between the positive electrode active material particles and the electrolyte solution, with CMC which increases the adhesive property of the positive electrode and prevents the side reaction between the positive electrode active material particles and the electrolyte solution, thereby achieving high lithium ionic conductivity and stable adhesion and preventing the side reaction for the positive electrode.

A weight ratio of the PVDF-based polymer and the CMC may be 1:9 to 9:1, and preferably 1: 1. When the weight ratio is included in the above-described range, lithium ionic conductivity, adhesion and chemical stability may be imparted to the positive electrode.

The ratio of the CMC to the PVDF-based polymer increases outwards from the surface of the positive electrode active material particles. In this case, the PVDF is present in a large amount and the CMC is present in a small amount near the surface of the positive electrode active material particles. When the PVDF is present in a large amount near the surface of the positive electrode active material, the PVDF swells after wetted by the electrolyte solution, which makes it easy to establish a conducting path of a lithium ion.

### 〈Aqueous solvent〉

The solvent uses an aqueous solvent other than an organic solvent commonly used to dissolve the binder, for example, N-methyl-2-pyrrolidone (NMP). In an embodiment of the present disclosure, the aqueous solvent may disperse the water-insoluble PVDF-based polymer and dissolve the water-soluble CMC.

The aqueous solvent may be a polar protic solvent. The polar protic solvent may include water, alcohol, acetate, formate, or a combination thereof.

The aqueous solvent may be a solvent comprising water as a main component. The aqueous solvent may comprise a polar protic solvent other than water. The amount of the polar protic solvent other than water included in the aqueous solvent may be 10 parts by weight or less, preferably 5 parts by weight or less, and more preferably 1 parts by weight or less based on 100 parts by weight of the aqueous solvent.

Preferably, the aqueous solvent may be water. When the aqueous solvent is water, the PVDF may be dispersed in water, and when a dispersion is dried, the PVDF may be attached to the surface of the positive electrode active material particles. Accordingly, it is possible to establish a conducting path of a lithium ion using the PVDF between the positive electrode active material particles and the electrolyte solution during charging/discharging.

The aqueous solvent is used in a sufficiently large amount to dissolve or disperse the positive electrode active material, a conductive material and a binder considering the coating thickness of the slurry or the yield, and have high viscosity enough to ensure high thickness uniformity when coating for manufacturing the positive electrode.

### 〈Lithium ion secondary battery〉

The present disclosure provides a lithium ion secondary battery comprising the positive electrode composition prepared using the slurry of the present disclosure. The lithium ion secondary battery comprises a positive electrode, a negative electrode opposite the positive electrode, a separator interposed between the positive electrode and the negative electrode and an electrolyte solution.

Optionally, the lithium ion secondary battery may further comprise a battery container to receive an electrode assembly of the positive electrode, the negative electrode and the separator, and a sealing member to seal the battery container.

There is no particular limitation on the shape of the lithium ion secondary battery of the present disclosure, but the lithium ion secondary battery may have a cylindrical using a can, prismatic, pouch or coin shape.

### 〈Positive electrode〉

**The positive** electrode comprises a positive electrode current collector and a positive electrode active material layer formed on the positive electrode current collector, and the positive electrode active material layer comprises the positive electrode composition.

The positive electrode current collector includes any type of positive electrode current collector that has conductivity while not causing a chemical change to the battery, and for example, stainless steel, aluminum, nickel, titanium, sintered carbon, or aluminum or stainless steel treated with carbon, nickel, titanium and silver on the surface. Additionally, in general, the positive electrode current collector is 3 to 500 *µ*m in thickness, and the current collector may have fine texture on the surface to increase the adhesive strength of the positive electrode active material. For example, the positive electrode current collector may have various shapes, for example, a film, a sheet, a foil, a net, a porous body, a foam and a nonwoven fabric.

### 〈Positive electrode composition〉

In addition to the positive electrode active material, the positive electrode composition may comprise a conductive material and a binder.

### <Positive electrode active material〉

The positive electrode active material includes any type of material capable of intercalating and deintercalating a lithium ion, but currently, a lithium transition metal oxide is typically used as the positive electrode active material to realize batteries with the outstanding life characteristics and charge/discharge efficiency.

The lithium transition metal oxide may include a transition metal, for example, a layered compound substituted with at least one transition metal such as lithium cobalt oxide (LiCoO₂), lithium nickel oxide (LiNiO₂); lithium manganese oxide substituted with at least one transition metal, lithium nickel oxide, spinel-based lithium nickel manganese composite oxide, spinel-based lithium manganese oxide with partial substitution of alkali earth metal ion for Li in Formula, olivine-based lithium metal phosphate, but is not limited thereto.

It is preferred to use the lithium containing transition metal oxide, for example, at least one selected from the group consisting of LiCoO₂, LiNiO₂, LiMnO₂, LiMn₂O₄, Li₂NiO₂, Li(NiₐCo_{b}Mn_{c})O₂ (0 < a < 1, 0 < b < 1, 0 < c < 1, a+b+c=1), LiNi_{1-Y}Co_{Y}O₂, LiCo_{1-Y}Mn_{Y}O₂, LiNi_{1-Y}Mn_{Y}O₂ (0≤Y < 1), Li(NiₐCo_{b}Mn_{c}) O₄ (0 < a < 2, 0 < b < 2, 0 < c < 2, a+b+c=2), LiMn_{2-z}Ni_{z}O₄, LiMn_{2-z}Co_{z}O₄ (0 < Z < 2), LiₓM_{y}Mn_{2-y}O_{4-z}A_{z} (0.9≤x≤1.2, 0 < y < 2, 0≤z < 0.2, M is at least one of Al, Mg, Ni, Co, Fe, Cr, V, Ti, Cu, B, Ca, Zn, Zr, Nb, Mo, Sr, Sb, W, Ti or Bi, A is at least one of monovalent (-1) anion or divalent (-2) anion), Li₁₊ₐNi_{b}M'_{1-b}O_{2-c}A'_{c} (0≤a≤0.1, 0≤b≤0.8, 0≤c < 0.2, M' is at least one selected from the group consisting of stable 6-coordinate elements such as Mn, Co, Mg, Al, A' is at least one of monovalent (-1) anion or divalent (-2) anion), LiCoPO₄, and LiFePO₄, and preferably LiCoO₂. In addition to these oxides, a sulfide, a selenide and a halide may be used.

Preferably, LiCoO₂ is used as the positive electrode active material.

The positive electrode active material may be included in an amount of 80 to 99 parts by weight and more specifically 85 to 98.5 parts by weight based on 100 parts by weight of the positive electrode composition. When the positive electrode active material is included in the above-described range, the outstanding capacity characteristics may be provided.

The average particle size of the positive electrode active material particles is 1 ~ 50*µ*m, and preferably 5 to 30*µ*m. When the average particle size of the positive electrode active material particles is within the above-described range, the capacity characteristics of the battery are superior. The average particle size of the positive electrode active material particles may be measured by the well-known method, for example, electron microscopy.

The average particle size of the positive electrode active material particles may be larger than the average particle size of the binder. When the average particle size of the positive electrode active material particles is larger than the average particle size of the binder, the binder may be attached to the surface of the positive electrode active material during mixing.

### 〈Conductive material〉

The conductive material is used to impart conductivity to the electrode, and includes any type of conductive material that has electrical conductivity in the battery. Specific examples may include at least one of graphite such as natural graphite or artificial graphite; a carbon-based material such as carbon black, acetylene black, ketjen black, channel black, furnace black, lamp black, thermal black, a carbon fiber; a metal powder or a metal fiber of copper, nickel, aluminum, silver; conductive whiskers of zinc oxide, potassium titanate; conductive metal oxide such as titanium oxide; or conductive polymer such as polyphenylene derivatives. The conductive material may be included in an amount of 0.1 to 15 parts by weight based on 100 parts by weight of the positive electrode composition.

For example, the positive electrode active material layer may be formed by coating a positive electrode active material layer forming composition prepared by dissolving or dispersing the positive electrode active material and optionally the binder and the conductive material in the solvent on the positive electrode current collector and drying, or may be manufactured by casting a positive electrode active material layer forming composition on a support and laminating a film separated from the support on the positive electrode current collector.

### 〈Negative electrode〉

**In** the lithium ion secondary battery, the negative electrode comprises a negative electrode current collector and a negative electrode active material layer disposed on the negative electrode current collector.

The negative electrode current collector includes any type of negative electrode current collector that has high conductivity while not causing a chemical change to the battery, and for example, copper, stainless steel, aluminum, nickel, titanium, sintered carbon, copper or stainless steel treated with carbon, nickel, titanium and silver on the surface, an aluminum-cadmium alloy. Additionally, in general, the negative electrode current collector is 3*µ*m to 500*µ*m in thickness, and in the same way as the positive electrode current collector, the current collector may have fine texture on the surface to increase the bonding of the negative electrode active material. For example, the negative electrode current collector may have various shapes, for example, a film, a sheet, a foil, a net, a porous body, a foam and a nonwoven fabric.

In addition to the negative electrode active material, the negative electrode active material layer optionally comprises a binder and a conductive material.

The negative electrode active material may include a compound capable of reversible intercalation and deintercalation of lithium. Specific examples may include at least one of a carbonaceous material such as artificial graphite, natural graphite, graphitized carbon fiber, amorphous carbon; a (semi)metal-based material that is alloyable with lithium such as Si, Al, Sn, Pb, Zn, Bi, In, Mg, Ga, Cd, Si alloy, Sn alloy, or Al alloy; (semi)metal oxide capable of doping and dedoping lithium such as SiO_{β} (0 < β < 2), SnO₂, vanadium oxide, lithium vanadium oxide; or a composite comprising a (semi)metal-based material and a carbonaceous material such as Si-C composite or Sn-C composite. Additionally, a metal lithium film may be used as the negative electrode active material. Additionally, the carbon material may include low crystallinity carbon and high crystallinity carbon. The low crystallinity carbon typically includes soft carbon and hard carbon, and the high crystallinity carbon typically includes amorphous, platy, scaly, spherical or fibrous high temperature sintered carbon such as natural graphite or artificial graphite, Kish graphite, pyrolytic carbon, mesophase pitch-based carbon fiber, mesocarbon microbeads, mesophase pitch, and coal and petroleum coke.

The negative electrode active material may be included in an amount of 80 parts by weight to 99 parts by weight based on 100 parts by weight of the negative electrode active material layer.

The binder used in the negative electrode is used to assist the bond between the conductive material, the active material and the current collector, and the binder is added in an amount of 0.1 parts by weight to 10 parts by weight based on 100 parts by weight of the negative electrode active material layer. Examples of the binder may include polyvinylidene fluoride (PVDF), polyvinylalcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-dienepolymer (EPDM), sulfonated EPDM, styrene butadiene rubber, nitrile butadiene rubber, fluorine rubber, and a copolymer thereof.

The conductive material is used to further improve the conductivity of the negative electrode active material, and may be added in an amount of 10 parts by weight or less, and preferably 5 parts by weight or less based on 100 parts by weight of the negative electrode active material layer. The conductive material is not limited to a particular type and preferably includes any type of conductive material that has conductivity and in particular, does not cause a chemical change to the corresponding battery. For example, the conductive material may include graphite such as natural graphite or artificial graphite; carbon black such as acetylene black, ketjen black, channel black, furnace black, lamp black, thermal black; a conductive fiber such as a carbon fiber or a metal fiber; carbon fluoride; metal powder such as aluminum, nickel powder; conductive whiskers of zinc oxide, potassium titanate; conductive metal oxide such as titanium oxide; a conductive material such as polyphenylene derivatives.

For example, the negative electrode active material layer may be formed by coating a negative electrode active material layer forming composition prepared by dissolving or dispersing the negative electrode active material, and optionally the binder and the conductive material in the solvent on the negative electrode current collector or drying, or may be manufactured by casting a negative electrode active material layer forming composition on a support and laminating a film separated from the support on the negative electrode current collector.

### 〈Separator〉

The separator separates the negative electrode and the positive electrode to provide a channel of movement of a lithium ion, and may include any type of separator commonly used in the separator of the lithium ion secondary battery, and in particular, the separate preferably has low resistance to the ion movement of the electrolyte solution and high electrolyte solution wettability. Specifically, for example, the separator may include a porous polymer film made of a polyolefin-based polymer such as an ethylene homopolymer, a propylene homopolymer, an ethylene/butene copolymer, an ethylene/hexene copolymer and an ethylene/methacrylate copolymer, or a stack structure of two or more layers of them. Additionally, a commonly used porous nonwoven fabric may include, for example, a nonwoven fabric made of high melting point glass fibers and polyethylene terephthalate fibers. Additionally, to ensure heat resistance or mechanical strength, the coated separator containing a ceramic or polymer material may be used, and may be selectively used as a single or multiple layer structure.

### 〈Electrolyte solution〉

The electrolyte solution may include an organic electrolyte solution and an inorganic electrolyte solution that may be used to manufacture the lithium ion secondary battery, but is not limited thereto.

The electrolyte solution may comprise an organic solvent and a lithium salt.

The organic solvent may include any type of organic solvent serving as a medium that allows the movement of an ion involved in the electrochemical reaction of the battery. Specifically, the organic solvent may include an ester-based solvent such as methyl acetate, ethyl acetate, γ-butyrolactone, ε-caprolactone; an ether-based solvent such as dibutyl ether or tetrahydrofuran; a ketone-based solvent such as cyclohexanone; an aromatic hydrocarbon solvent such as benzene, fluorobenzene; a carbonate-based solvent such as dimethyl carbonate (DMC), diethyl carbonate (DEC), ethyl methyl carbonate (EMC), ethylene carbonate (EC), propylene carbonate (PC); an alcohol-based solvent such as ethyl alcohol, isopropyl alcohol; nitriles such as R-CN (R is a straight chain, branched or cyclic hydrocarbon group having 2 to 20 carbon atoms, and may comprise a double-bond, an aromatic ring or ether bond); amides such as dimethyl formamide; dioxolanes such as 1,3-dioxolane; or sulfolanes. Among them, a carbonate-based solvent is desirable, and a mixture of a cyclic carbonate having high ionic conductivity and high dielectric constant (for example, ethylene carbonate or propylene carbonate) to improve the charge/discharge performance of the battery and a low viscosity chain carbonate-based compound (for example, ethyl methyl carbonate, dimethyl carbonate or diethyl carbonate) is more desirable. In this case, a mixture of cyclic carbonate and chain carbonate at a volume ratio of about 1:1 to about 1:9 provides the outstanding performance of the electrolyte solution.

The lithium salt may include any type of compound capable of providing a lithium ion used in the lithium ion secondary battery. Specifically, the lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI or LiB(C₂O₄)₂. The concentration of the lithium salt may be used in the range of 0.1 to 2.0 M. When the concentration of the lithium salt is included in the above-described range, the electrolyte solution has an appropriate conductivity and viscosity and shows the outstanding electrolyte solution performance, thereby achieving the effective movement of a lithium ion.

In addition to the electrolyte solution components, to improve the life characteristics of the battery, prevent the reduction of the battery capacity and improve the discharge capacity of the battery, the electrolyte solution may further comprise at least one type of additive, for example, a haloalkylene carbonate-based compound such as difluoroethylene carbonate, pyridine, triethyl phosphite, triethanol amine, cyclic ether, ethylene diamine, n-glyme, hexamethyl phosphoric triamide, nitrobenzene derivatives, sulfur, quinone imine dye, N-substituted oxazolidinone, N,N-substituted imidazolidine, ethyleneglycol dialkylether, an ammonium salt, pyrrole, 2-methoxy ethanol, or aluminum trichloride. In this instance, the additive may be included in an amount of 0.1 to 5 parts by weight based on 100 parts by weight of the electrolyte solution.

Hereinafter, the embodiments of the present disclosure will be described in sufficiently detail for those skilled in the art to easily practice the invention. However, the present disclosure may be embodied in many different forms, and is not limited to the embodiments described herein.

### [Fabrication of coin cell]

In the examples and comparative examples of the present disclosure, a PVDF polymer is used as the fluoride-based polymer.

### (Example 1)

96 parts by weight of LiCoO₂ as a positive electrode active material and 1 part by weight of PVDF powder are mixed using a mixer (Thinky, ARE-310) so that PVDF is supported on the surface of LiCoO₂ particles. 2 parts by weight of conductive carbon black (Super P^{™}) as a conductive material and 1 part by weight of CMC as a water-soluble polymer for imparting the thickening property to an aqueous slurry for a positive electrode are added and mixed. Subsequently, pure water is added to have viscosity for good thickness uniformity in the coating process for manufacturing a positive electrode to obtain an aqueous slurry for a positive electrode. The obtained aqueous slurry for a positive electrode is coated on a 20*µ*m thick aluminum foil to the thickness of about 60*µ*m, and vacuum dried at 120°C overnight to manufacture a positive electrode sheet in which the positive electrode composition is deposited on the aluminum foil. The obtained positive electrode sheet is punched into a circular shape having the diameter of 13mm circle with the electrode density of 3.8 to 3.9 g/cc to manufacture a positive electrode. A 2016 coin cell is fabricated using the obtained positive electrode, a 0.3mm thick metal lithium as the counter electrode, an electrolyte solution comprising EC:DMC:DEC at a volume ratio of 1:2:1 and 1 M LiPF₆.

### (Reference Example 2)

96 parts by weight of LiCoO₂ as a positive electrode active material, 1 part by weight of PVDF powder as a binder composition, 1 part by weight of CMC as a water-soluble polymer for imparting the thickening property to an aqueous slurry for a positive electrode, and 2 parts by weight of SuperP as a conductive material are mixed together, so that the PVDF and the CMC are supported on the surface of LiCoO₂ particles. Pure water is added thereto to obtain an aqueous slurry for a positive electrode. Subsequently, the same method as example 1 is used to fabricate a coin cell.

### (Comparative example 1)

A coin cell is fabricated by the same method as reference example 2, except that instead of pure water as an aqueous solvent, an organic solvent, NMP, is used, and instead of 1 part by weight of PVDF and 1 part by weight of CMC, 2 parts by weight of PVDF is used.

### (Comparative example 2)

A coin cell is fabricated by the same method as reference example 2, except that instead of 1 part by weight of PVDF and 1 part by weight of CMC, 1 part by weight of CMC is used.

### (Comparative example 3)

A coin cell is fabricated by the same method as reference example 2, except that instead of 1 part by weight of PVDF and 1 part by weight of CMC, 2 parts by weight of CMC is used.

### (Comparative example 4)

A coin cell is fabricated by the same method as reference example 2, except that instead of 1 part by weight of PVDF and 1 part by weight of CMC, 1 part by weight of SBR and 1 part by weight of CMC are used.

### (Comparative example 5)

A coin cell is fabricated by the same method as reference example 2, except that instead of 1 part by weight of PVDF and 1 part by weight of CMC, 1 part by weight of PVDF, 0.5 parts by weight of SBR and 0.5 parts by weight of CMC are used.

A difference in composition and binder mixing order of the positive electrode composition in examples 1 and 2 and comparative examples 1 to 3 is shown in the following Table 1. Each value in Table 1 indicates parts by weight based on 100 parts by weight of the positive electrode composition comprising the positive electrode active material, the PVDF, the water-soluble polymer and the conductive material.

**[Table 1]**

| Composition and binder mixing order of positive electrode composition | | | | | | | |
|---|---|---|---|---|---|---|---|
| | Example 1 | Reference Example 2 | Comparative example 1 | Comparative example 2 | Comparative example 3 | Comparative example 4 | Comparative example 5 |
| Positive electrode active material | 96 | 96 | 96 | 96 | 96 | 96 | 96 |
| PVDF | 1 | 1 | 2 | 0 | 0 | 0 | 0.5 |
| Water-soluble polymer (CMC) | 1 | 1 | 0 | 1 | 2 | 1 | 1 |
| SBR | 0 | 0 | 0 | 0 | 0 | 1 | 0.5 |
| Conductive material | 2 | 2 | 2 | 2 | 2 | 2 | 2 |
| Solvent | Water | Water | NMP | Water | Water | Water | Water |
| Binder mixing | Individually | Simultaneously | Simultaneously | Simultaneously | Simultaneously | Simultaneously | Simultaneously |

### [1] Peel test evaluation of positive electrode

The peel strength of the positive electrode in the coin cells obtained in examples 1 and 2 and comparative examples 1 to 3 is measured under the condition of the peel rate of 300 mm/min using a measurement device (SHIMADZU, EZ-SX). A sample is such that a double sided adhesive tape having the width of 15mm and length of 60mm is attached to one surface of a slide glass, and a test piece obtained by cutting the positive electrode into the width of 15mm and length of 150mm is attached to the opposite surface. The results are shown in the following Table 2.

**[Table 2]**

| Peel strength | | | | | |
|---|---|---|---|---|---|
| | | Example 1 | Comparative example 1 | Comparative example 2 | Comparative example 3 |
| Initial peak bulging point [N] | Without press [N] | 1.55 | 0.74 | 0.68 | 1.80 |
| | With press [N] | 0.49 | 0.79 | N.D. | 0.61 |
| Average test score (10-100 mm)[N] | Without press [N] | 0.245 | 0.017 | ≤0 | 0.083 |
| | With press [N] | 0.087 | 0.042 | ≤0 | ≤0 |

Without press, example 1 shows the highest average test score of 0.245[N]. The peel strength of comparative example 2 shows 0.68[N] as the initial peak, but the average test score is very close to zero, and it is smaller than 0.083[N] which is the average test score of comparative example 3. Meanwhile, as shown in FIG. 1, among comparative examples 2 and 3, comparative example 3 shows poorer cycle characteristics. By this reason, in the case of the positive electrode active material having a small volume change during charging/discharging, it is thought that the bonding·adhesive properties of the binder less affect the cycle characteristics.

### [2] Evaluation of cycle characteristics and capacity retention

To determine if lithium ionic conductivity, adhesive property and chemical stability were imparted to the positive electrode, the cycle characteristics and the capacity retention of the coin cells fabricated in examples 1 and 2 and comparative examples 1 to 5 are evaluated as follows. Presumably, when the lithium ionic conductivity is high, a lithium ion is smoothly transported during charging/discharging, when the adhesive property is good, bonds between the components of the positive electrode are improved, and when chemical stability is high, degradation of the binder and the active material is prevented, thereby improving the cycle characteristics and the capacity retention.

The cycle characteristics are evaluated by charging/discharging each coin cell at 25°C and 45°C. Specifically, after each coin cell is charged/discharged a few cycles in the voltage range of 4.55V-3V at the current rate of 0.2C charge and 0.2C discharge in a constant temperature tank maintaining at 25°C, each coin cell is moved to a constant temperature tank maintaining at 45°C, and then repeatedly charged/discharged 50 cycles in the voltage range of 4.55V-3V at the current rate of 0.5C charge and 1C discharge.

For the initial capacity during charging measured at each temperature, the values of each example and comparative example when the initial capacity of comparative example 1 at each temperature is 100 are shown in the following Table 3. Meanwhile, the initial cycle at 45°C is the 6th cycle as the battery.

**[Table 3]**

| Initial capacity on the basis of comparative example 1 | | | | | | | |
|---|---|---|---|---|---|---|---|
| | Example 1 | Reference Example 2 | Comparative example 1 | Comparative example 2 | Comparative example 3 | Comparative example 4 | Comparative example 5 |
| 25°C | 100 | 99 | 100 | 98 | 97 | 93 | 94 |
| 45°C | 100 | 99 | 100 | 98 | 97 | 94 | 94 |

Irrespective of the measurement temperature, example 1 using the aqueous slurry for a positive electrode obtains the equivalent initial capacity to comparative example 1 using the NMP solvent. Reference example 2 of a different binder mixing order from example 1 obtains the initial capacity of 99 that is lower than comparative example 1. Comparative examples 2 and 4 using only CMC as the binder obtain the initial capacity of 98 and 97 respectively. Comparative examples 4 and 5 comprising SBR in the electrode composition obtain the initial capacity of 93 and 94 respectively. Examples 1 and 2 and comparative example 1 comprising PVDF as the binder obtain higher initial capacity than comparative examples 2 and 3 not comprising PVDF as the binder. Presumably, the PVDF swells after wetted by the electrolyte solution and acts as a conducting path of a lithium ion, thereby promoting the lithium ion conduction between the positive electrode active material particles and the electrolyte solution. Additionally, it is thought that a significant reduction in the initial capacity of comparative examples 4 and 5 comprising SBR in the electrode composition is caused by the decomposition of the SBR on the oxidation side as commonly known.

Subsequently, the results of the cycle characteristics are shown in FIG. 1. Referring to FIG. 1, in example 1 in which the positive electrode active material and the PVDF are mixed and then the CMC is added, the cycle characteristics are best. In reference example 2 in which the positive electrode active material, PVDF and CMC are mixed at the same time, the cycle characteristics are equivalent to the cycle characteristics of comparative example 1 using NMP as the organic solvent. Comparative examples 2 and 3 using only CMC as the binder have poorer cycle characteristics than example 1, and comparative examples 4 and 5 comprising SBR in the electrode composition exhibit the lowest cycle characteristics, and notable degradation during cycling, such as an abnormal change in retention.

Additionally, a ratio of the binder included in the positive electrode composition, and the capacity retention indicated as a ratio of capacity after 50 cycles/capacity after 1 cycle is shown in Table 4.

**[Table 4]**

| Capacity retention | | | | | | | |
|---|---|---|---|---|---|---|---|
| | Example 1 | Reference Example 2 | Comparative example 1 | Comparative example 2 | Comparative example 3 | Comparative example 4 | Comparative example 5 |
| 50th/1st @45°C[%] | 89.1 | 81.5 | 81.5 | 76.2 | 74.8 | 61.2 | 68.9 |

Referring to Table 4, reference example 2 exhibits the capacity retention of 81.5% that is equivalent to the capacity retention of 81.5% of comparative example 1. When the aqueous solvent is used as the dispersing medium of the slurry for a positive electrode, it is possible to achieve the cycle characteristics and the capacity retention that are equivalent to those when the organic solvent is used as conventionally. Presumably, a combination of PVDF and CMC as the aqueous binder may impart the improved lithium ionic conductivity, adhesive property and chemical stability to the positive electrode, thereby improving the cycle characteristics and the capacity retention.

Additionally, example 1 exhibits the highest capacity retention of 89.1%. In example 1, since the positive electrode active material and the PVDF are mixed and then the CMC is added, presumably, the PVDF is first attached to the surface of the positive electrode active material and the positive electrode active material is coated with the CMC. Accordingly, presumably, compared to reference example 2 in which the positive electrode active material, the PVDF and the CMC are mixed at the same time, with the increasing ratio of the PVDF to the CMC on the surface of the positive electrode active material particles, the conducting path of a lithium ion between the positive electrode active material and the electrolyte solution increases, thereby improving the cycle characteristics and the capacity retention.

Comparative examples 2 and 3 exhibit the capacity retention of less than 80%. Since the positive electrode active material is chiefly coated with the CMC, the adhesive property and chemical stability improve, but presumably the conducting path of a lithium ion reduces due to the coating, and as a result, the cycle characteristics degrade and the capacity retention reduces.

Comparative examples 4 and 5 exhibit the capacity retention of less than 70%. In the same way as comparative examples 2 and 3, presumably due to the coating of CMC, the conducting path of a lithium ion reduces, and the capacity retention reduces due to the oxidative decomposition of SBR.

Additionally, although not shown, when the voltage is 4.50V that is lower than 4.55V, or when the temperature is 25°C that is lower than 45°C, examples 1 and 2 and comparative example 1 exhibit the equal cycle characteristics and capacity retention. It can be seen that the positive electrode of example 1 has high lithium ionic conductivity, adhesive property and chemical stability in the severe conditions of high temperature of 45°C and high voltage of 4.55V.

## Claims

1. A method for manufacturing an aqueous slurry for a positive electrode, comprising:
mixing a fluoride-based polymer, a water-soluble polymer comprising carboxymethyl cellulose (CMC) and a positive electrode active material to obtain a mixture, and
dispersing the mixture in an aqueous solvent,
wherein obtaining the mixture comprises mixing the fluoride-based polymer and the positive electrode active material, and adding the water-soluble polymer and mixing.

2. An aqueous positive electrode slurry obtainable according to the method of claim 1.

3. The aqueous positive electrode slurry according to claim 2, wherein the fluoride-based polymer is particulate, and is at least one selected from polyvinylidene fluoride (PVDF), PVDF-HFP, PVDF-CTFE, PVDF-TrFE, PVDF-TFE.

4. A positive electrode composition, comprising:
a binder composition for a positive electrode comprising a fluoride-based polymer, and a water-soluble polymer comprising carboxymethyl cellulose (CMC), and
positive electrode active material particles,
wherein a ratio of the water-soluble polymer to the fluoride-based polymer increases outwards from a surface of the positive electrode active material particles.

5. A lithium ion secondary battery comprising the positive electrode composition according to claim 4.

6. A method for manufacturing a positive electrode, comprising:
coating the aqueous slurry for a positive electrode according to claim 2 on a positive electrode current collector, and
drying the aqueous solvent.

7. A positive electrode obtainable according to the method of claim 6.

8. A method for manufacturing a lithium ion secondary battery comprising the method for manufacturing a positive electrode according to claim 6.

## Patentansprüche

1. Verfahren zur Herstellung einer wässrigen Aufschlämmung für eine positive Elektrode, umfassend:
das Mischen eines fluoridbasierten Polymers, eines wasserlöslichen Polymers, das Carboxymethylcellulose (CMC) umfasst, und eines Aktivmaterials für eine positive Elektrode, um ein Gemisch zu erhalten, und
das Dispergieren des Gemischs in einem wässrigen Lösungsmittel,
worin das Erhalten des Gemischs das Mischen des fluoridbasierten Polymers und des Aktivmaterials für eine positive Elektrode und die Zugabe des wasserlöslichen Polymers und das Mischen umfasst.

2. Wässrige Aufschlämmung für eine positive Elektrode, die durch das Verfahren gemäß Anspruch 1 erhältlich ist.

3. Wässrige Aufschlämmung für eine positive Elektrode gemäß Anspruch 2, worin das fluoridbasierte Polymer partikelförmig ist und mindestens eines ist, ausgewählt aus Polyvinylidenfluorid (PVDF), PVDF-HFP, PVDF-CTFE, PVDF-TrFE, PVDF-TFE.

4. Zusammensetzung für eine positive Elektrode, umfassend:
eine Bindemittelzusammensetzung für eine positive Elektrode, die ein fluoridbasiertes Polymer umfasst, und ein wasserlösliches Polymer, das Carboxymethylcellulose (CMC) umfasst, und
Aktivmaterialpartikel für eine positive Elektrode,
worin ein Anteil des wasserlöslichen Polymers zum fluoridbasierten Polymer von der Oberfläche der Aktivmaterialpartikel für eine positive Elektrode nach außen hin zunimmt.

5. Lithiumsekundärbatterie, umfassend die Zusammensetzung für eine positive Elektrode gemäß Anspruch 4.

6. Verfahren zur Herstellung einer positiven Elektrode, umfassend:
das Beschichten der wässrigen Aufschlämmung für eine positive Elektrode gemäß Anspruch 2 auf einen Stromabnehmer für eine positive Elektrode und
das Trocknen des wässrigen Lösungsmittels.

7. Positive Elektrode, die durch das Verfahren gemäß Anspruch 6 erhältlich ist.

8. Verfahren zur Herstellung einer Lithiumsekundärbatterie, umfassend das Verfahren zur Herstellung einer positiven Elektrode gemäß Anspruch 6.

## Revendications

1. Procédé de fabrication d'une suspension aqueuse d'électrode positive, comprenant :
le mélange d'un polymère à base de fluorure, un polymère soluble dans l'eau comprenant de la carboxyméthylcellulose (CMC) et un matériau actif d'électrode positive pour obtenir un mélange, et
la dispersion du mélange dans un solvant aqueux,
dans lequel l'obtention du mélange comprend le mélange du polymère à base de fluorure et du matériau actif d'électrode positive, et l'ajout du polymère soluble dans l'eau et le mélange.

2. Suspension aqueuse d'électrode positive pouvant être obtenue selon le procédé de la revendication 1.

3. Suspension aqueuse d'électrode positive selon la revendication 2, dans laquelle le polymère à base de fluorure est particulaire, et est au moins un sélectionné parmi le polyfluorure de vinylidène (PVDF), le PVDF-HFP, le PVDF-CTFE, le PVDF-TrFE, le PVDF-TFE.

4. Composition d'électrode positive, comprenant :
une composition de liant pour une électrode positive comprenant un polymère à base de fluorure et un polymère soluble dans l'eau comprenant de la carboxyméthylcellulose (CMC), et
des particules de matériau actif d'électrode positive,
dans laquelle un rapport entre le polymère soluble dans l'eau et le polymère à base de fluorure augmente vers l'extérieur à partir d'une surface des particules de matériau actif d'électrode positive.

5. Batterie secondaire au lithium-ion comprenant la composition d'électrode positive selon la revendication 4.

6. Procédé de fabrication d'une électrode positive, comprenant :
l'application de la suspension aqueuse d'électrode positive selon la revendication 2 sur un collecteur de courant d'électrode positive, et
le séchage du solvant aqueux.

7. Électrode positive pouvant être obtenue selon le procédé de la revendication 6.

8. Procédé de fabrication d'une batterie secondaire au lithium-ion comprenant le procédé de fabrication d'une électrode positive selon la revendication 6.
